# EUROPEAN PATENT APPLICATION

(11) **EP 2 979 793 A1**
(43) Date of publication of application: **03.02.2016**
(21) Application number: 14775564.9
(22) Date of filing: 25.03.2014
(51) Int. Cl.: B23B 51/00

(54) **INSERT FOR DRILL AND CUTTING BLADE REPLACEMENT-TYPE DRILL**

(30) Priority: 25.03.2013 JP 2013061393
(71) Applicant: Mitsubishi Materials Corporation, Chiyoda-ku Tokyo 100-8117 (JP)
(72) Inventor: MATSUNAGA Kohei, Anpachi-gun Gifu 503-2301 (JP); KAWADE Yasuhiko, Anpachi-gun Gifu 503-2301 (JP); TANAKA Shogo, Anpachi-gun Gifu 503-2301 (JP); SATO Takahiro, Joso-shi Ibaraki 300-2795 (JP)
(74) Representative: Hoffmann Eitle
(86) International application number: PCT/JP2014/058181
(87) International publication number: WO 2014/157135

(57) **Abstract**

An insert for a drill is provided which is capable of being detachably attached to an axial line (O) side and an outer circumferential side of a tip portion of a drill main body (11) rotated around an axial line (O), in which cutting edges (3) are formed on ridge portions of a polygonal face in a drill rotation direction of a polygonal flat plate-shaped insert body (1) such that rotation trajectories around the axial line (O) toward a tip side of the drill main body (11) overlap each other when viewed in an axial line (O) direction, and a land (8) is provided on each of the cutting edges (3). The insert is formed such that, when the insert is attached to the drill main body (11), a land angle of the land (8) gradually increases to a negative angle side from one end portion (3A) of the cutting edge (3) positioned on an outer circumferential side of the drill main body (11) toward the other end portion (3B) side of the cutting edge (3), and a land width of the land (8) gradually increases from the one end portion (3A) of the cutting edge (3) toward the other end portion (3B) side.

## Description

### TECHNICAL FIELD

The present invention relates to an insert for a drill which is detachably attached to a cutting blade replacement-type drill performing drilling on a work material such as stainless steel or soft steel, and a cutting blade replacement-type drill to which the insert for a drill is attached.

Priority is claimed on Japanese Patent Application No. 2013-061393, filed March 25,2013, the content of which is incorporated herein by reference.

### BACKGROUND ART OF THE INVENTION

For example, as the insert for a drill, Patent Document 1 discloses an insert for a drill in which an approximately square flat plate-shaped insert body is provided, a cutting edge is formed on a ridge portion of one square face, and a height of the cutting edge measured from a bottom face of the insert body is changed in a length direction of the cutting edge.

In addition, Patent Document 1 also discloses a cutting blade replacement-type drill in which two inserts for a drill are detachably attached to an axial line side and an outer circumferential side at a distance in a circumferential direction from a tip portion of a drill main body rotating around an axial line so that rotation trajectories of mutual cutting edges around the axial line overlap each other.

Here, in the cutting blade replacement-type drill disclosed in Patent Document 1, in the insert for a drill on the outer circumferential side, one end portion of the cutting edge is disposed on the outer circumferential side. In addition, in the insert for a drill on the axial line side, when viewed from a direction opposing the square face, one end portion of the cutting edge is disposed on the outer circumferential side, the other end portion side of the cutting edge intersects the axial line, and the one end portion side of the cutting edge is attached so as to be positioned at a tip side in an axial direction from the cutting edge of the insert for a drill attached to the other end portion side and the outer circumferential side of the cutting edge.

### CITATION LIST

### Patent Document

Patent Document 1: Published Japanese Translation No. 2010-503545 of the PCT International Publication

### DETAILED DESCRIPTION OF THE INVENTION

### Problems to be solved by The Invention

In the cutting blade replacement-type drill to which the insert for a drill is attached, the one end portion of the cutting edge of the insert for a drill on the axial line side initially bites a work material. However, when cutting resistance increases during the biting, an amount of deflection also increases. In order to decrease the cutting resistance, for example, if a breaker groove is formed on the cutting edge and a rake angle of the cutting edge increases due to the breaker groove, sharpness of the cutting edge increases and the cutting resistance decreases. However, strength of the cutting edge is damaged. Accordingly, in a case where the cutting edge of the insert for a drill on the outer circumferential side bites the work material, when deflection of a drill is eliminated and the insert for a drill on the axial line side is instantly returned to an initial position, the cutting edge receives an impact load, and particularly, there is a concern that a defect may occur on the other end portion side of the cutting edge in which a circumferential speed generated by rotation of the drill main body intersecting the axial line when viewed in a direction opposing the square face decreases.

The present invention is made in consideration of the above-described circumstance, and an object thereof is to provide an insert for a drill capable of decreasing cutting resistance when the insert for a drill attached on the axial line side, particularly, of the above-described cutting blade replacement-type drill bites a work material, preventing a defect of the cutting edge when the insert for a drill on the outer circumferential side bites the work material, and obtaining favorable sharpness even when the insert for a drill is attached to the outer circumferential side, and a cutting blade replacement-type drill to which the cutting insert for a drill is attached.

### Solution to Problem

In order to solve the above-described problems and achieve the object, according to an aspect of the present invention, an insert for a drill is provided which is capable of being detachably attached to an axial line side and an outer circumferential side of a tip portion of a drill main body rotated around an axial line, including: a polygonal flat plate-shaped insert body; cutting edges which are formed on ridge portions of a polygonal face in a drill rotation direction of the insert body, and in which rotation trajectories around the axial line toward a tip side of the drill main body overlap each other when viewed in an axial direction; and a land which is provided on the cutting edges, in which the insert is formed such that, when the insert is attached to the drill main body, a land angle of the land gradually increases to a negative angle side from one end portion of the cutting edge positioned on an outer circumferential side of the drill main body toward the other end portion side of the cutting edge, and a land width of the land gradually increases from the one end portion of the cutting edge toward the other end portion side.

In addition, according to another aspect of the present invention, a cutting blade replacement-type drill is provided, in which inserts for a drill having the same shape and the same size as each other are detachably attached to an axial line side and an outer circumferential side of a tip portion of a drill main body rotated around an axial line such that a polygonal face is directed in a drill rotation direction, a cutting edge faces a tip side of the drill main body, and rotation trajectories around the axial line overlap each other when viewed in an axial direction, the insert for a drill is attached to the outer circumferential side of the drill main body such that one end portion of the cutting edge is positioned on the outer circumferential side of the drill main body, the insert for a drill is attached to the axial line side of the drill main body such that one end portion of the cutting edge is positioned on the outer circumferential side when viewed in a direction opposing the polygonal face, the other end portion side of the cutting edge intersects the axial line, and one end portion side of the cutting edge is positioned further toward a tip side in the axial direction than the cutting edge of the insert for a drill attached to the other end portion side of the cutting edge and the outer circumferential side.

In the insert for a drill having the above-describe configuration, when the insert for a drill is attached to the drill main body, the land angle of the land provided on the cutting edge gradually increases to a negative angle side from the one end portion of the cutting edge positioned on the outer circumferential side of the drill main body toward the other end portion side, and the land width also increases. Accordingly, a wall thickness of the insert body in the vicinity of cutting edge increases while sharpness on the other end portion side of the cutting edge decreases, strength of the cutting edge can be secured, and conversely, it is possible to obtain increased sharpness on the one end portion side of the cutting edge.

Therefore, in the cutting blade replacement-type drill to which the insert for a drill is attached as described above, it is possible to decrease cutting resistance when one end portion side of the cutting edge of the insert for a drill on the axial line side positioned at the tipmost side in the axial direction bites a work material, and it is possible to decrease an amount of deflection of the drill main body. In addition, in this way, since the amount of deflection decreases, strength of the cutting edge on the other end portion side of the cutting end is secured. Accordingly, even in a case where deflection of the drill main body is eliminated when the insert for a drill on the outer circumferential side bites, it is possible to prevent the occurrence of a defect on the other end portion side intersecting the axial line.

Also in the cutting edge of the insert for a drill attached to the outer circumferential side of the tip portion of the drill main body, since the one end portion side having increased sharpness is positioned on the outer circumferential side, for example, it is possible to obtain favorable cutting performance on the outer circumferential side on which many chips are generated when a work material such as stainless steel or soft steel is drilled. In addition, in the cutting blade replacement-type drill having the above-described configuration, since the inserts for a drill attached to the outer circumferential side and the axial line side have the same shape and the same size as each other, the insert body can be manufactured using a common metal die, it is possible to reduce a manufacturing cost, and it is also possible to easily perform management with respect to the insert.

In addition, preferably, the land angle gradually increases to the negative angle side from the one end portion of the cutting edge toward the other end portion side within a range of -10° to 15°, and the land width gradually increases from the one end portion of the cutting edge toward the other end portion side within a range from 0.25 mm or less. If the land angle increases toward the negative angle side over this range or the land width increases over this range, there is a concern that cutting resistance on the other end portion side may increase. Meanwhile, if the land angle increases toward a positive angle side over this range or the land width is 0 mm, that is, the land is not provided, there is a concern that the strength of the cutting edge on the one end portion side may be damaged and a defect may easily occur.

In addition, a breaker groove continuous to the land is formed on the polygonal face, the rake angle of the cutting edge formed by the breaker groove gradually increases to the negative angle side from the one end portion of the cutting edge toward the other end portion side, and the breaker depth of the breaker groove from the cutting edge gradually decreases from the one end portion of the cutting edge toward the other end portion side. Accordingly, it is possible to decrease cutting resistance on the one end portion side of the cutting edge, and it is possible to secure strength of the cutting edge on the other end portion side.

Particularly, the above-described work material such as stainless steel or soft steel is a soft material having easily extendable chips, and therefore, by increasing the rake angle and the breaker depth in the one end portion of the cutting edge positioned on the outer circumferential side of the drill main body in which many chips are generated, it is possible to secure favorable breakability with respect to the easily extendable chips. However, also in this case, preferably, the rake angle is within a range of 0° to 20°, and the breaker depth is within a range of 0 mm to 1 mm.

Advantageous Effects of Invention

As described above, according to an aspect of the cutting blade replacement-type drill of the present invention, in the insert for a drill on the axial line side of the tip portion of the drill main body, it is possible to decrease an amount of deflection of the drill main body by decreasing cutting resistance when the one end portion side of the cutting end on the outer circumferential side bites, and it is possible to prevent a defect even when deflection is eliminated by securing strength of the cutting edge on the other end portion side intersecting the axial line. In addition, also in the insert for a drill on the outer circumferential side, it is possible to improve cutting performance due to the one end portion on the outer circumferential side.

### BRIEF DESCRIPTION OF DRAWINGS

FIG. 1 is a perspective view showing an embodiment of an insert for a drill of the present invention.
FIG. 2 is a plan view of the embodiment shown in FIG. 1.
FIG. 3 is a side view of the embodiment shown in FIG. 1.
FIG. 4 is a sectional view taken along XX in FIG. 2.
FIG. 5 is a sectional view taken along YY in FIG. 2.
FIG. 6 is a sectional view taken along ZZ in FIG. 2.
FIG. 7 is an enlarged sectional view in the vicinity of a cutting edge of a lower side in FIG. 4.
FIG. 8 is an enlarged sectional view in the vicinity of a cutting edge of a lower side in FIG. 5.
FIG. 9 is an enlarged sectional view in the vicinity of a cutting edge of a lower side in FIG. 6.
FIG. 10 is a front view of a tip portion of a drill main body showing an embodiment of a cutting blade replacement-type drill of the present invention to which the insert for a drill of the embodiment shown in FIG. 1 is attached.
FIG. 11 is a side view when the embodiment shown in FIG. 10 is viewed in a direction opposing a polygonal face of an insert for a drill on an outer circumferential side.
FIG. 12 is a side view when the embodiment shown in FIG. 10 is viewed in a direction opposing a polygonal face of an insert for a drill on an axial line side.

### DESCRIPTION OF EMBODIMENTS

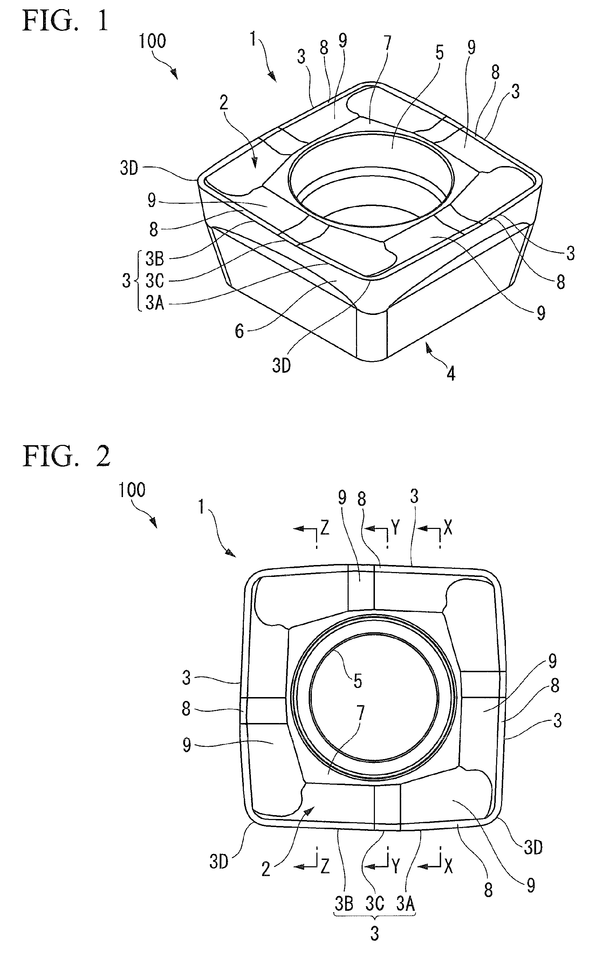

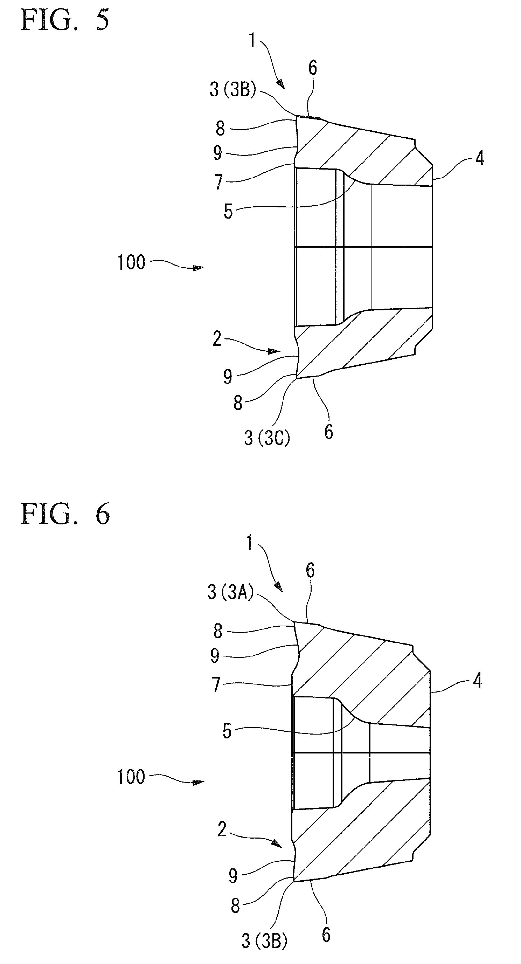

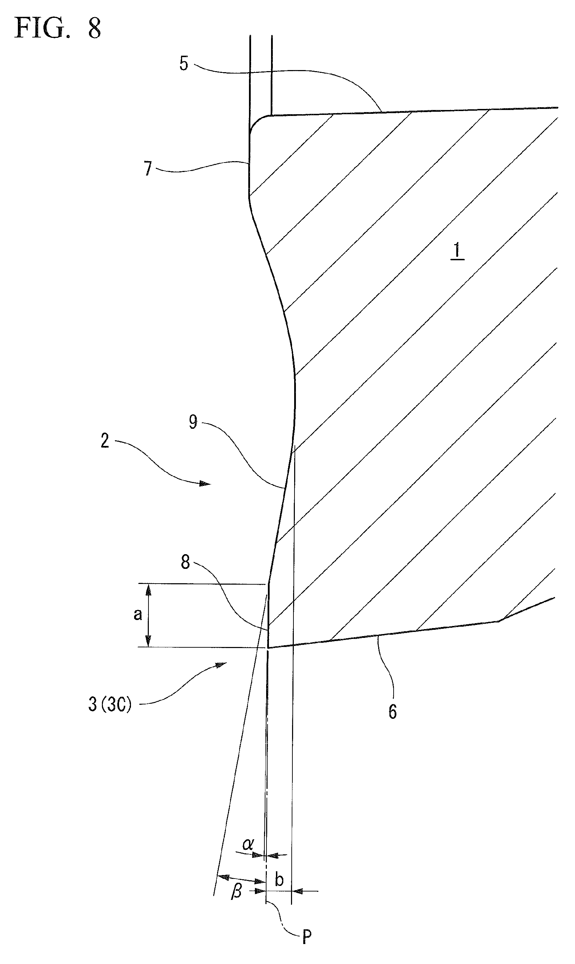

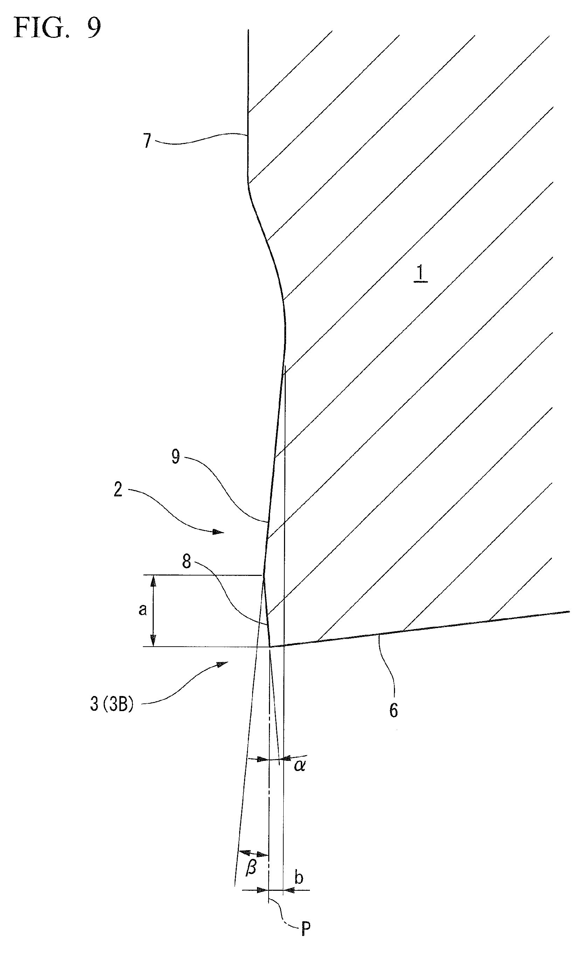

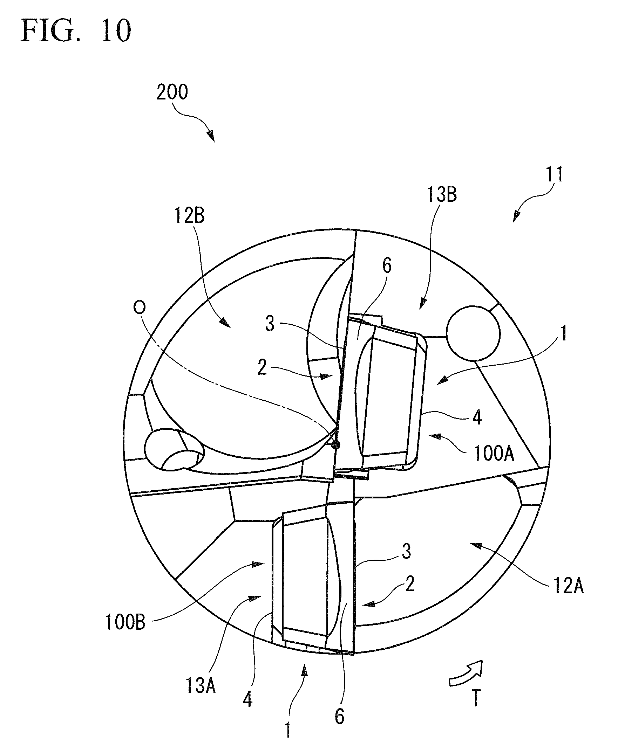

FIGS. 1 to 9 show an embodiment of an insert for a drill of the present invention, and FIGS. 10 to 12 show an embodiment of a cutting blade replacement-type drill 200 of the present invention to which an insert for a drill 100 is attached. In the insert for a drill 100 of the present embodiment, an insert body 1 is formed in a polygonal flat plate shape and is made of a hard material such as cemented carbide, and specifically, in the embodiment, the insert body 1 is formed in an approximately square flat plate shape, and cutting edges 3 with one square face as a rake face 2 are respectively formed on four ridge portions of the one square face.

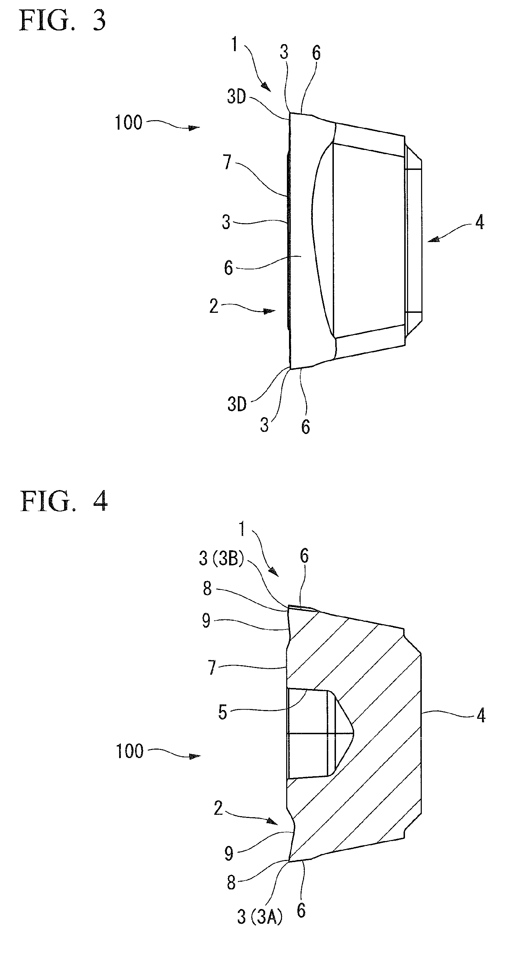

In addition, the other square face of the insert body 1 is a seating face 4, and an attachment hole 5 penetrating in a thickness direction (a right-left direction in FIGS. 3 to 6) of the insert body 1 is formed from a center of the rake face 2 to a center of the seating face 4. The insert body 1 is formed so as to have 90° rotational symmetry around a center line of the attachment hole 5, and the seating face 4 is a flat face perpendicular to a center line.

In addition, a flank face 6 continuous to the cutting edges 3 is formed on four side faces of the insert body 1, the flank face 6 is formed so as to gradually retreat to an inner side of the insert body 1 from the cutting edges 3 toward the seating face 4 side in the thickness direction and has a constant relief angle. Therefore, the insert for a drill 100 of the present embodiment is a positive type insert. In addition, the side faces of the insert body 1 are formed so as to be retreated and to be inclined with a plurality of steps from the flank face 6 toward the seating face 4.

A planar boss face 7 perpendicular to the center line is formed in the vicinity of the attachment hole 5 at a center of the rake face 2, and the boss face 7 is positioned so as to protrude furthest on the rake face 2. In addition, lands 8 are provided on the cutting edges 3, and in the present embodiment, the lands 8 are formed over the entire circumference of the square face formed by the rake face 2. Moreover, a breaker groove 9 is formed between the lands 8 and the boss face 7. In the present embodiment, the breaker grooves 9 are also formed on the entire circumference of the rake face 2.

Here, when the insert body 1 is attached to a tip portion of a drill main body 11 described below, the cutting edges 3 extend from an outer circumferential side of the drill main body 11 to an inner circumferential side thereof (axial line O side), a portion positioned on the outer circumferential side of the drill main body 11 becomes one end portion 3A of the cutting edge 3, and a portion positioned on the inner circumferential side of the drill main body 11 becomes the other end portion 3B of the cutting edge 3. The insert for a drill 100 of the present embodiment is a so-called right-hand insert which is used in the cutting blade replacement-type drill 200 in which the drill main body 11 is rotated in a counterclockwise direction when viewed from a tip side in an axial line O direction to perform drilling, and as shown in FIG. 2 in a plan view when viewed in a direction opposing the rake face 2 along the center line, a right portion of the cutting edge 3 becomes the one end portion 3A positioned on the outer circumferential side of the drill main body 11, and a left portion of the cutting edge 3 becomes the other end portion 3B.

In addition, in the present embodiment, as shown in FIG. 2 in the plan view, the one end portion 3A and the other end portion 3B of the cutting edge 3 are formed so as to be bent in a slight obtuse angle in a center portion 3C therebetween, each of the one end portion 3A and the other end portion 3B extend in an approximately straight line shape, and the center portion 3C is formed so as to be shorter than the one end portion 3A and the other end portion 3B. Moreover, in four corners in which adjacent cutting edges 3 intersect each other, corner cutting edges 3D having an approximately 1/4 arc shape coming into contact with the one end portions 3A and the other end portions 3B of the adjacent cutting edges 3 in the plan view are formed. In addition, in the present embodiment, a ridge line of the cutting edge 3 at which the land 8 and the flank face 6 intersect each other is positioned on one plane P perpendicular to the center line.

Moreover, a land angle α of the land 8 provided on the cutting edge 3 gradually increases to a negative angle side from one end portion 3A of the cutting edge 3 toward the other end portion 3B side, and a land width a of the land 8 gradually increases from the one end portion 3A of the cutting edge 3 toward the other end portion 3B side. Here, the land angle α increases toward a negative angle side within a range of -10° to 15° from a contact point between the one end portion 3A of the cutting edge 3 and the corner cutting edge 3D coming into contact with the one end portion 3A toward the other end portion 3B via the center portion 3C, and in the present embodiment, a positive angle is formed at the one end portion 3A, a negative angle is formed at the other end portion 3B, and the land width a gradually increases within a range of 0.25 mm or less.

Moreover, in the present embodiment, a rake angle β of the cutting edge 3 formed by the breaker groove 9 continuous to the land 8 also gradually increases to a negative angle side from the one end portion 3A toward the other end portion 3B side, and a breaker depth b of the breaker groove 9 from the cutting edge 3 gradually decreases from the one end portion 3A of the cutting edge 3 toward the other end portion 3B side. Here, in the present embodiment, the rake angle β of the cutting edge 3 gradually increases to a negative angle side within a range of 0° to 20° from a contact point between the one end portion 3A of the cutting edge 3 and the corner cutting edge 3D coming into contact with the one end portion 3A toward the other end portion 3B via the center portion 3C, and the breaker depth b gradually decreases within a range of 1 mm or less.

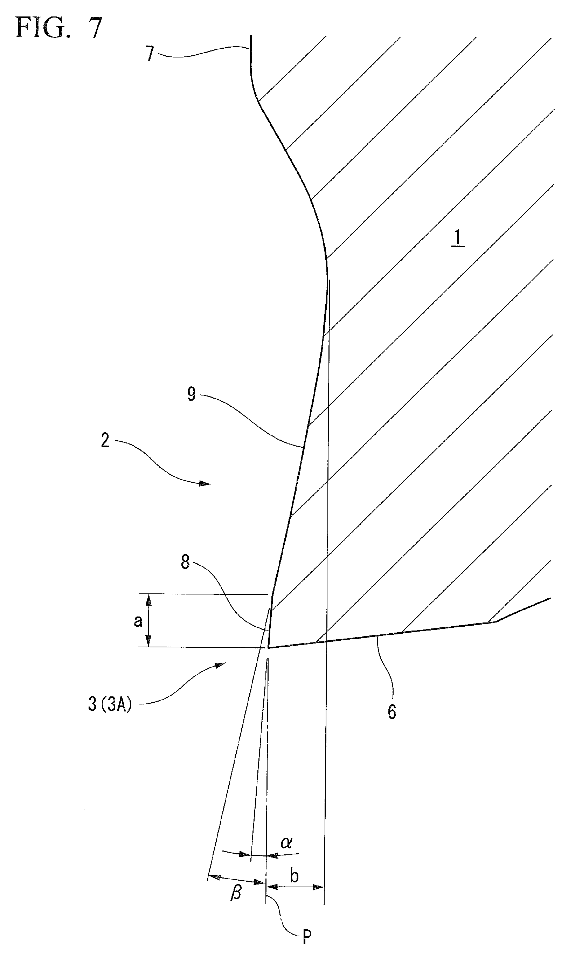

In addition, as shown in FIGS. 7 to 9, the land angle α is an angle between the plane P on which the ridge line of the cutting edge 3 is positioned and the land 8, the rake angle β of the cutting edge 3 formed by the breaker groove 9 is an angle between a bottom face of the breaker groove 9 continuous to the land 8 and the plane P, a case where bottom faces of the land 8 and the breaker groove 9 retreat toward the seating face 4 side from the cutting edge 3 toward the inner side of the rake face 2 is set to a positive angle, and conversely, a case where the bottom faces protrude toward the seating face 4 is set to a negative angle. In the present embodiment, at any position of the cutting edge 3, the land angle α toward a negative angle side is greater than the rake angle β toward a negative angle side. In addition, the land width a is a width in a direction along the plane P, and a breaker depth b of the breaker groove 9 from the cutting edge 3 is a depth from the plane P to a groove bottom of the breaker groove 9 in a direction perpendicular to the plane P, that is, the thickness direction.

In addition, in the present embodiment, a wall face rising from the bottom face of the breaker groove 9 is continuous with respect to the bottom face to form a recessed curved face and reaches the boss face 7, and in the plan view, as shown in FIG. 2, the groove width of the breaker groove 9 from the land 8 to the boss face 7 gradually decreases from the one end portion 3A of the cutting edge 3 toward the other end portion 3B side. However, in an inner side of the corner cutting edge 3D, the breaker groove 9 continuous to the one end portion 3A of one cutting edge 3 of adjacent cutting edges 3 is formed to notch the breaker groove 9 continuous to the other end portion 3B of the other cutting edge 3. Therefore, the groove width of the breaker groove 9 continuous to the other end portion 3B is very small.

In the cutting blade replacement-type drill 200 of the present embodiment to which the insert for a drill 100 is detachably attached, the drill main body 11 is formed of a metal material such as a steel material, and as shown in FIGS. 10 to 12, a tip portion of the drill main body 11 has a columnar outer shape about the axial line O.

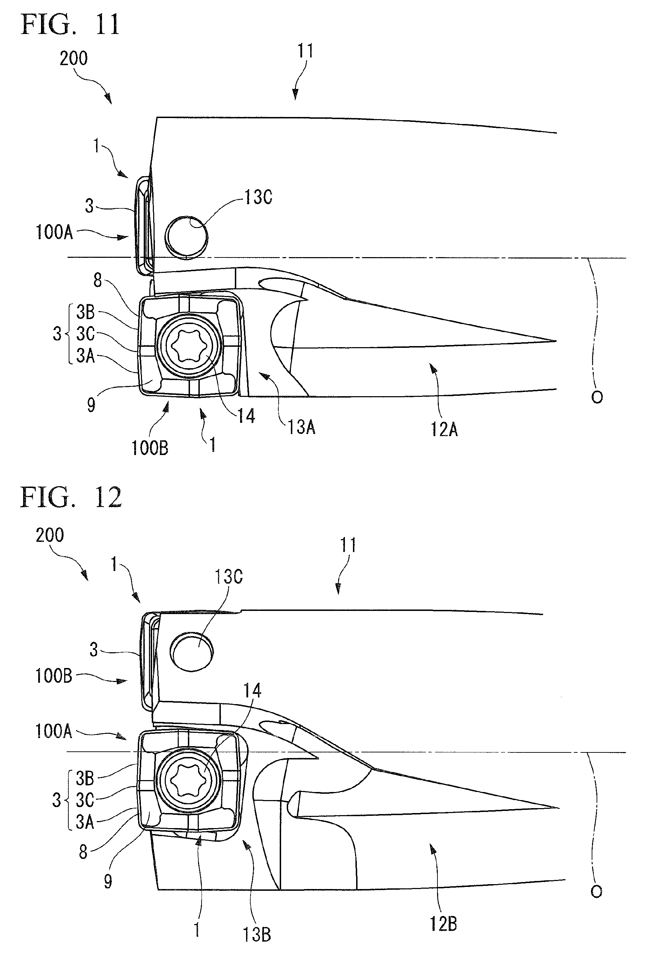

In the cutting blade replacement-type drill 200, one insert for a drill 100 is attached to each of an outer circumferential side and an axial line O side of the tip portion of the drill main body 11, the inserts for a drill 100 are fed to a tip side (left side in FIGS. 11 and 12) in the axial line O direction while being rotated around the axial line O in a drill rotation direction shown by a reference numeral T in FIG. 10, and for example, drilling is performed with respect to a work material formed of a metal material such as stainless steel or soft steel.

In the outer circumference of the tip portion of the drill main body 11, a pair of chip discharge flutes 12A and 12B are formed so as to be slightly twisted toward a rear side in the drill rotation direction T around the axis line O toward a posterior end side on opposite sides at a distance from each other in a circumferential direction. In the pair of chip discharge flutes, an outer circumferential side insert attachment seat 13A which is open to a tip face and an outer circumferential face of the drill main body 11 is formed on an outer circumferential portion of the tip of the wall face in the drill rotation direction T of one chip discharge flute (a chip discharge flute on the lower right side in FIG. 10) 12A, and an axial line side insert attachment seat 13A which is open to the tip face of the drill main body 11 is formed on an inner circumferential portion of the tip of the wall face in the drill rotation direction T of the other chip discharge flute (a chip discharge flute on the upper left side in FIG. 10) 12B.

Screw holes 13C are formed on bottom faces in the drill rotation direction T of the outer circumferential side and axial line side insert attachment seats 13A and 13B, and in the insert for a drill 100 of the embodiment, the square face serving as the rake face 2 is directed in the drill rotation direction T. In addition, one among four cutting edges 3 protrudes from the tip face of the drill main body 11 so that the one end portion 3A is positioned on the outer circumferential side of the drill main body 11, the seating face 4 is seated on the bottom faces of the outer circumferential side and axial line side insert attachment seats 13A and 13B, and a clamp screw 14 inserted from the rake face 2 side is screwed to the screw hole 13C. Therefore, the insert for a drill 100 is detachably attached to the outer circumferential side and axial line side insert attachment seats 13A and 13B. In the present embodiment, in the inserts for a drill 100, the insert bodies 1 are formed to have the same shape and the same size as each other.

In this way, in the inserts for a drill 100 attached to the outer circumferential side and the axial line O side of the tip portion of the drill main body 11, the one end portion 3A of the cutting edge 3 protruding to the tip side of the axial line side insert for a drill 100A attached to the axial line side insert attachment seat 13B is approximately positioned on the plane perpendicular to the axial line O, and accordingly, the other end portion 3B which extends in a direction intersecting the one end portion 3A in an obtuse angle is slightly inclined so as to be directed to a posterior end side of the drill main body 11 in a direction away from the one end portion 3A. Moreover, as shown in FIG. 12, the protruding other end portion 3B of the cutting edge 3 of the axial line side insert for a drill 100A intersects the axial line O of the drill main body 11 when viewed in a direction opposing the square face serving as the rake face 2.

In addition, the cutting edge 3 protruding to a tip side of the drill main body 11 of the insert for a drill 100 is formed so that rotation trajectories of the cutting edge around the axial line O overlap each other when viewed in the axial line O direction. In the present embodiment, the other end portion 3B of the cutting edge 3 protruding to the tip side of the outer circumferential side insert for a drill 100B attached to the outer circumferential side insert attachment seat 13A, and the one end portion 3A of the cutting edge 3 protruding to the tip side of the axial line side insert for a drill 100A overlap each other.

However, in the cutting edge 3 protruding to a tip side of the drill main body 11 of the axial line side insert for a drill 100A, a plane perpendicular to the axial line O, at which the one end portion 3A is positioned, is positioned slightly further toward the tip side than the cutting edge 3 protruding to a tip side of the drill main body 11 of the outer circumferential side insert for a drill 100B. Accordingly, as described above, since the other end portion 3B side of the cutting edge 3 is inclined toward the posterior end side of the drill main body 11 as it moves away from the one end portion 3A, the one end portion 3A side of the cutting edge 3 in the axial line side insert for a drill 100A is positioned at the tipmost side in the cutting edge 3 protruding to a tip side.

Therefore, when a work material is drilled by the cutting blade replacement-type drill 200 to which the insert for a drill 100 having the above-described configuration is attached, first, the one end portion 3A of the cutting edge 3 of the axial line side insert for a drill 100A protruding to the tipmost side of the drill main body 11 bites a work material. At this time, the tip portion of the drill main body 11 receives a main partial force of cutting resistance in only one direction (right direction in FIG. 10) in a radial direction with respect to the axial line O, deflection occurs in the same direction, and when the cutting resistance increases, an amount of deflection of the tip portion of the drill main body 11 also increases when the axial line side insert for a drill 100A bites.

Next, when the drill main body 11 is fed to the tip side in the axial line O direction and the cutting edge 3 protruding to the tip side of the outer circumferential side insert for a drill 100B bites a work material, the tip portion of the drill main body 11 also receives the cutting resistance in a direction (right direction in FIG. 10) opposite to the one direction, the main partial force is canceled out, and deflection is instantly eliminated. In this case, as described above, when the amount of deflection of the tip portion of the drill main body 11 increases when the axial line side insert for a drill 100A bites, the axial line side insert for a drill 100A also immediately returns strongly, and in the protruding cutting edges 3 of the axial line side insert for a drill 100A that has been already bitten into the work material, particularly, an impact load is applied to the other end portion side 3B side in which a circumferential speed decreases due to rotation of the drill main body 11 and which is positioned so as to intersect the axial line O.

On the other hand, in the insert for a drill 100 having the above-described configuration, when the insert is attached to the tip portion of the drill main body 11, since the land angle α of the land 8 on the one end portion 3A side of the cutting edge 3 positioned on the outer circumferential side increases toward a positive angle side, the land width a also decreases, and increased sharpness is applied to the one end portion, it is possible to decrease cutting resistance when the one end portion 3A side in the axial line side insert for a drill 100A bites, and it is possible to decrease an amount of deflection during the biting. Meanwhile, since the land angle α of the land 8 increases in the negative angle side toward the other end portion 3B side of the cutting edge 3 and the land width a also increases, it is possible to secure high strength of the cutting edge by increasing a wall thickness of the insert body 1 in the vicinity of the cutting edge 3 on the other end portion 3B side.

Therefore, according to the insert for a drill 100 and the cutting blade replacement-type drill 200 having the above-described configuration to which the insert for a drill 100 is attached as the axial side insert for a drill 100A, as described above, since the amount of deflection of the tip portion of the drill main body 11 is decreased and a return amount when the outer circumferential side insert for a drill 100B bites can be decreased, it is possible to secure high strength of the cutting edge on the other end portion 3B side. Accordingly, it is possible to prevent the outer end portion 3B side of the cutting edge 3 from being damaged due to a load generated by return of the axial line side insert for a drill 100A.

In addition, in the cutting blade replacement-type drill 200 having the above-described configuration, the outer circumferential side insert for a drill 100B having the same shape and the same size as the axial line side insert for a drill 100A is also attached to the outer circumferential side of the tip portion of the drill main body 11 so that the one end portion 3A of the cutting edge 3 is positioned on the outer circumferential side. Particularly, since a rotation trajectory around the axial line O is longest and many chips are generated in the portion of the cutting edge 3 of the outer circumferential side insert for a drill 100B on the outer circumferential side of the drill main body 11, by increasing the land angle α toward the positive angle side and decreasing the land width α so as to dispose the one end portion 3A of the cutting edge 3 having increased sharpness, it is possible to obtain favorable cutting performance with respect to the above-described work material such as stainless steel or soft steel.

Moreover, in the present embodiment, the land angle α gradually increases to the negative angle side from the one end portion 3A of the cutting edge 3 toward the other end portion 3B side within a range of -10° to 15°, and the land width a gradually increases from the one end portion 3A of the cutting edge 3 toward the other end portion 3B side within a range of 0.25 mm or less. Therefore, it is possible to more securely achieve the above-described effects. That is, if the land angle α increases toward the negative angle side over this range or the land width a increases over this range, there is a concern that cutting resistance on the other end portion side 3B side may excessively increase. Meanwhile, if the land angle α increases toward a positive angle side over this range or the land width a is 0 mm, that is, the land 8 is not provided, there is a concern that the strength of the cutting edge on the one end portion 3A side may be damaged and a defect may occur.

Meanwhile, in the insert of a drill 100 of the present embodiment, the breaker groove 9 is formed on the rake face 2 so as to be continuous to the land 8. Similarly to the land angle α, the rake angle β of the cutting edge 3 formed by the breaker groove 9 also gradually increases to the negative angle side from the one end portion 3A of the cutting edge 3 toward the other end portion 3B side, and the breaker depth b of the breaker groove 9 from the cutting edge 3 gradually decreases from the one end portion 3A of the cutting edge 3 toward the other end portion 3B side. Accordingly, it is possible to secure strength of the cutting edge on the other end portion 3B side and prevent defects or the like, and it is possible to provide increased sharpness to the one end portion 3A side of the cutting edge 3.

In addition, a work material such as stainless steel or soft steel is a soft material, and chips easily extend. However, since the rake angle β formed by the breaker groove 9 increases toward the positive angle side on the one end portion 3A of the cutting edge 3 positioned on the outer circumferential side of the drill main body 11 and the depth b of the breaker groove 9 increases, chips are accommodated in the breaker groove 9 having the increased depth. Therefore, chips collide with the wall face rising from the bottom surface of the breaker groove 9, in which the rake angle β continuous with the land 8 increases toward the positive angle side, to the boss face 7. Accordingly, according to the present embodiment, it is possible to promote reliable break of chips generated by the extension property.

In addition, preferably, the rake angle β of the cutting edge 3 formed by the breaker groove 9 is within a range of 0° to 20°, and the breaker depth b from the cutting edge 3 is within a range of 0 mm to 1 mm. If the rake angle β is smaller than this range and becomes a negative angle or the breaker depth b is less than this range, that is, the groove bottom of the breaker groove 9 is positioned at a higher position in the thickness direction than the cutting edge 3, there is a concern that cutting resistance on the other end side of the cutting edge 3 may increase. Meanwhile, if the rake angle P increases toward the positive angle side over this range or the breaker depth b increases over this range, there is a concern that the strength of the cutting edge on the one end portion 3A of the cutting edge 3 may deteriorate.

In addition, in the cutting blade replacement-type drill 200 having the above-described configuration, as described above, since the outer circumferential side insert for a drill 100B attached to the outer circumferential side of the tip portion of the drill main body 11 and the axial line side insert for a drill 100A attached to the axial line O side have the same shape and the same size as each other, when the insert body 1 is manufactured using powder-metallurgy processing, it is possible to form a green compact of raw powder such as cemented carbide from which the insert body 1 is manufactured using a common metal die, a manufacturing cost can be reduced, and it is also possible to easily perform management with respect to an insert.

In addition, as the inserts for a drill 100 which are attached to the outer circumferential side and the axial line side of the tip portion in the drill main body 11 of the cutting blade replacement-type drill 200, inserts for a drill are known in which the cutting edges when the insert is used as the outer circumferential side insert for a drill 100B and the cutting edges when the insert is used as the axial line side insert for a drill 100A are formed on one insert body, and the insert body is alternately attached to the outer circumferential side insert attachment seat and the axial line side insert attachment seat when the insert is used as the outer circumferential side insert for a drill 100B and when the insert is used as the axial line side for a drill 100A. However, in the inserts for a drill 100, a kind of material of the insert body attached to one cutting blade replacement-type drill 200 should be limited to one kind.

On the other hand, in the insert for a drill 100 of the present embodiment, the insert body 1 is formed so as to have rotational symmetry around the center axis at a predetermined angle (90°), and in the cutting blade replacement-type drill 200 of the present embodiment, one insert for a drill 100 can use a plurality (four) cutting edges 3, which are formed on the rake face 2, for a dedicated outer circumferential side insert for a drill 100B and a dedicated axial line side insert for a drill 100A. Accordingly, even when the insert bodies 1 have the same shape and the same size as each other, it is possible to manufacture insert bodies 1 formed of different kinds of material from each other such as a material suitable for the outer circumferential side insert for a drill 100B and a material suitable for the axial line side insert for a drill 100A, a degree of freedom in selection of a kind of material increases, and it is possible to more effectively perform drilling while maintaining reduction of a manufacturing cost or easiness of insert management.

### INDUSTRIAL APPLICABILITY

According to an aspect of a cutting blade replacement-type drill of the present invention, in an insert for a drill on an axial line side of a tip portion of a drill main body, it is possible to decrease an amount of deflection of the drill main body by decreasing cutting resistance when one end portion side of a cutting end on an outer circumferential side bites, and it is possible to prevent a defect even when deflection is eliminated by securing strength of the cutting edge on the other end portion side intersecting an axial line. In addition, also in an insert for a drill on an outer circumferential side, it is possible to improve cutting performance due to the one end portion on the outer circumferential side. Accordingly, the present invention can be applied to industrial application.

### REFERENCE SIGNS LIST

100: Insert for Drill
200: Cutting Blade Replacement-Type Drill
1: Insert Body
2: Rake Face
3: Cutting Edge
3 a: One End Portion of Cutting Edge 3
3b: Other End Portion of Cutting Edge 3
3c: Center Portion of Cutting Edge 3
6: Flank Face
8: Land
9: Breaker Groove
11: Drill Main Body
O: Axial Line of Drill Main Body 11
T: Drill Rotation Direction
α: Land Angle
β: Rake Angle of Cutting Edge 3 Formed by Break Groove 9
a: Land Width
b: Depth of Breaker Groove 9 From Cutting Edge 3

## Claims

1. An insert for a drill which is capable of being detachably attached to an axial line side and an outer circumferential side of a tip portion of a drill main body rotated around an axial line, the insert for a drill comprising:
a polygonal flat plate-shaped insert body;
cutting edges which are formed on ridge portions of a polygonal face in a drill rotation direction of the insert body, and in which rotation trajectories around the axial line toward a tip side of the drill main body overlap each other when viewed in an axial direction; and
a land which is provided on the cutting edges,
wherein the insert for a drill is formed such that, when the insert is attached to the drill main body, a land angle of the land gradually increases to a negative angle side from one end portion of the cutting edge positioned on an outer circumferential side of the drill main body toward the other end portion side of the cutting edge, and a land width of the land gradually increases from the one end portion of the cutting edge toward the other end portion side.

2. The insert for a drill according to Claim 1,
wherein the land angle is within a range of -10° to 15°, and the land width is within a range of 0.25 mm or less.

3. The insert for a drill according to Claim 1 or 2,
wherein a breaker groove continuous to the land is formed on the polygonal face,
a rake angle of the cutting edge formed by the breaker groove gradually increases to the negative angle side from the one end portion of the cutting edge toward the other end portion side, and
a breaker depth of the breaker groove from the cutting edge gradually decreases from the one end portion of the cutting edge toward the other end portion side.

4. The insert for a drill according to Claim 3,
wherein the rake angle is within a range of 0° to 20°, and the breaker depth is within a range of 0 mm to 1 mm.

5. A cutting blade replacement-type drill,
wherein inserts for a drill according to any one of Claims 1 to 4 having the same shape and the same size as each other are detachably attached to an axial line side and an outer circumferential side of the tip portion of a drill main body rotated around an axial line such that the polygonal face is directed in the drill rotation direction, the cutting edge faces the tip side of the drill main body, and rotation trajectories around the axial line overlap each other when viewed in an axial direction,
the insert for a drill is attached to the outer circumferential side of the drill main body such that one end portion of the cutting edge is positioned on the outer circumferential side of the drill main body,
the insert for a drill is attached to the axial line side of the drill main body such that one end portion of the cutting edge is positioned on the outer circumferential side when viewed in a direction opposing the polygonal face, the other end portion side of the cutting edge intersects the axial line, and one end portion side of the cutting edge is positioned further toward a tip side in the axial direction than the cutting edge of the insert for a drill attached to the other end portion side of the cutting edge and the outer circumferential side.
